# EUROPÄISCHE PATENTANMELDUNG

(11) **EP 3 096 195 A1**
(43) Veröffentlichungstag der Anmeldung: **23.11.2016**
(21) Anmeldenummer: 16162512.4
(22) Anmeldetag: 29.03.2016
(51) Int. Cl.: G05B 19/4097, B44C 1/22, G06F 17/50

(54) **VERFAHREN ZUR STEUERUNG EINER WERKZEUGMASCHINE**

(30) Priorität: 19.05.2015 DE 102015209095
(71) Anmelder: Benecke-Kaliko AG, 30419 Hannover (DE)
(72) Erfinder: Stahlhut, Oliver, 30900 Wedemark OT Mellendorf (DE); Jungbluth, Benjamin, 30177 Hannover (DE); Rosenhahn, Bodo, 30952 Ronnenberg (DE)
(74) Vertreter: Kilsch, Armin Ralph

(57) **Zusammenfassung**

Verfahren zur Steuerung einer Werkzeugmaschine mit Hilfe eines Steuerungs-Datensatzes, wobei die Werkzeugmaschine entweder zur Bearbeitung von Werkzeugen zur Herstellung oder Bearbeitung einer dreidimensionalen Produktoberfläche / Oberfläche einsetzbar ist und die den Steuerungs-Datensatz bildenden Daten dadurch ermittelt werden, dass ein ursprünglicher Datensatz topologischer Daten der vorab segmentierten Oberfläche mit Hilfe von Referenzwerten einer rechnerisch simulierten Beleuchtung und Reflexionsbetrachtung unterworfen wird, deren Ergebnis-Daten als Reflexions-Datensatzes abgespeichert werden, mit den ebenso erstellten Daten eines Referenzdatensatzes verglichen wird, wobei Ursprungsdatensatz in Richtung auf den Referenzdatensatz verändert und letzterem angenähert und als modifizierter Ursprungsdatensatz abgespeichert wird.

## Beschreibung

Die Erfindung betrifft ein Verfahren zur Steuerung einer Werkzeugmaschine mit Hilfe eines Steuerungs-Datensatzes, wobei die Werkzeugmaschine entweder zur Bearbeitung von Werkzeugen zur Herstellung oder Bearbeitung einer dreidimensionalen Produktoberfläche / Oberfläche einsetzbar ist, vorzugsweise von Tiefziehformen, oder aber zur Bearbeitung einer Produktoberfläche / Oberfläche als solche einsetzbar ist, wobei die Produkt- oder Folienoberfläche mit einer Mikrostruktur, insbesondere einer Kuppen und Täler bildenden Narbung oder Prägung versehen ist.

Mit z.B. thermoplastischen Folien versehene dreidimensional geformte Bauteiloberflächen findet man in der Regel als Oberflächen im Automobilinnenraum. Die Folien sind oft mit einer mikroskopisch dreidimensional strukturierten Oberfläche, also etwa einer Narbung oder Prägung versehen und werden auch als mikrostrukturierte Dekorfolien bezeichnet. Hierbei wird die üblicherweise bereits in einem vorlaufenden Formgebungsschritt mit einer Oberflächenstruktur versehene Folie einem weiteren nachfolgenden formgebenden Verarbeitungsschritt unterworfen, insbesondere einem formgebenden Tiefziehen, bei dem die Folie ihre Bauteilform erhält.

Der vorlaufende Formgebungsschritt, bei dem die Folie mit einer Oberflächenstruktur versehen wird, besteht in aller Regel aus einem Prägeverfahren. Als nachfolgenden formgebenden Verarbeitungsschritt kennt man dabei neben dem Tiefziehen natürlich eine Reihe weiterer Umformverfahren, wie etwa Thermoformen, Presskaschieren, Hinterspritzen, Negativ Thermoformen (IMG in-mould graining), bei denen die Folie gegen Formen gepresst oder gesaugt wird und damit ihre Bauteilform erhält.

Solche Folien, oft ausgebildet als relativ weiche unterschäumte/hinterschäumte Folien mit angenehmer Haptik, so genannte Schaumfolien, werden etwa für die Verkleidung von Armaturenbrettern oder die Innenschalen von Türen etc. verwendet oder auch für andere hochwertig beschichtete Waren genutzt.

Im Stand der Technik sind zur Herstellung solcher Formhäute verschiedene Verfahren bekannt, zum Beispiel Walzverfahren zur Herstellung von "endlosen" Folienbahnen oder auch Verfahren zur Herstellung von werkzeugfallenden einzelnen Formhäuten.

Dem Fachmann ist in Bezug auf nachfolgende Verformungsverfahren das Problem bekannt, dass beim Aufbringen einer Folie auf ein dreidimensionales Bauteil, also etwa bei einem Ziehvorgang, bei dem eine mit einer einheitlich geprägten Oberfläche versehene Folie in ein Formwerkzeug gezogen (Tiefziehen) oder über einen festen Träger oder Grundkörper gespannt wird, es natürlich zu erheblichen Verformungen der Folie kommen kann. Es können dabei Verzerrungen durch sich ändernde Abstände zwischen einzelnen Oberflächenbereichen entstehen, die dem Betrachter als Unregelmäßigkeiten sofort auffallen. Da im Bereich des Automobilinterieurs ein starker Trend zur Verbesserung der Qualitätsanmutung zu beobachten ist, sind solche Unregelmäßigkeiten immer weniger akzeptabel. Insbesondere wird dabei das Erscheinungsbild einer solchen Folie im Hinblick auf Beleuchtungen und Blickwinkel wichtig, wobei natürlich möglichst früh und vor Festlegung der mikroskopisch dreidimensionalen Folienstruktur eine Vorhersage erfolgen sollte, wie die später hergestellte und verformte Folie unter verschiedenen Blickwinkeln und Beleuchtungen auf den Betrachter wirkt.

Üblicherweise werden bisher gegenständliche Prototypen von folienbeschichteten Bauteilen hergestellt, die dann, oft zusammen mit dem Automobilhersteller, begutachtet werden und bei Fehlern immer noch einmal mit geänderten Parametern als Einzelteile und oft in Handarbeit aufwendig hergestellt und wiederum geprüft werden. Das ist natürlich eine sehr aufwendige und teure Art des Herantastens an die endgültig zu fertigende Ausführung.

Seit einiger Zeit und mit fortschreitender Automatisierung und Rechnerunterstützung auch in den Fertigungsbereichen und im Prototypenbau versucht man, computergestützte Verfahren zu nutzen, die im Rahmen einer Modellrechnung oder Simulation das Erscheinungsbild von Prototypen, hier natürlich auch Folien, vorherzubestimmen. Der tatsächliche optische Eindruck, wie er bei einer gegenständlich-natürlichen Bauteiloberfläche mit einer umgeformten und mit einer Narbung versehenen Folie entsteht, wird aber immer noch nur unzureichend dargestellt. Insbesondere werden die Auswirkungen des Herstellungsprozesses am virtuellen Bauteil bisher nur durch eine lokale Skalierung repräsentiert.

Der derzeitige Entwicklungsprozess von mikrostrukturierten Dekorfolien für den Automobilinnenraum erlaubt auch nur eine begrenzte Vorhersage und Manipulation der beleuchtungs- und blickwinkelabhängigen Erscheinung bzw. daraus resultierender Inhomogenitäten des fertigen Produkts (Dekorfolie).

Die Merkmale, welche die Oberflächenstruktur nach derzeitigem Stand charakterisieren, basieren auf einer blick- und beleuchtungswinkelinvaranten Analyse der Feinstruktur. Genauer gesagt, wird hier die Häufigkeit von feinen Strukturen auf der gesamten Oberfläche ermittelt. Diese ermittelten Merkmale können dann in einem iterativen Prozess zur Homogenisierung der Oberflächenstruktur herangezogen werden, wie er etwa in der DE10 2006 028 238 B3 offenbart ist.

Richtungsabhängige Merkmale können nach dem jetzigen Stand der Technik nur für "vollsynthetisierte" d.h. künstlich hergestellte und mit Datensätzen digitaler Größen darstellbare Oberflächenstrukturen eingebracht werden. Diese Merkmale basieren jedoch weiterhin nur auf einer Feinstrukturanalyse, wobei eine gezielte Kompensation nach heutigem Stand nicht möglich ist.

Eine umfassendere Beeinflussung der Reflexionseigenschaften mikrostrukturierter Oberflächen wird auch beschrieben in "Fabricating Microgeometry for Custom Surface Reflectance. ACM Transactions on Graphics (Proc. SIGGRAPH), August 2009. Weyrich ,Tim; Peers, Pieter; Matusik, Wojciech; Rusinkiewicz, Szymon. Hier wird jedoch die Reflektion als alleiniges Merkmal optimiert, d.h. der Erhalt der Anmutung einer Topologie der optimierten Oberfläche ist nicht gewährleistet.

Es ist also wünschenswert, bereits im Vorfeld zu wissen, wie die fertige Folie z.B. im Fahrzeug unter verschiedenen Blickwinkeln und Beleuchtungen auf den Betrachter wirkt, , damit der Fertigungsprozess und die Auslegung der Prägung und der Umformung so angepasst werden können, dass Struktur-, Beleuchtungs- und Verformungseinflüsse möglichst vorab kompensiert werden.

Bei den rechnerunterstützten Verfahren liegen die wesentlichen Defizite aus heutiger Sicht darin, dass die Modifikation von Oberflächenstrukturen nur anhand von richtungsunabhängigen Merkmalen erfolgt und dass die Blick- und Beleuchtungsrichtung nur in Spezialfällen, d.h. nur bei "vollsynthetisierter" Oberflächen berücksichtigt werden kann. Auch ist nachteilig, dass die Generierung der Oberflächencharakteristika nur aus der Feinstruktur erfolgt, nicht aber unter Berücksichtigung weiterer Parameter, wie oben angerissen.

Für die Erfindung bestand also die Aufgabe, eine Verbesserung des Entwicklungs- und Herstellungsprozesses von Oberflächenstrukturen dahingehend zu erreichen, dass eine etwaige blick- und beleuchtungsrichtungsabhängige inhomogene Erscheinung von mikrostrukturierten Dekorfolien bereits bei deren Generierung/Herstellung berücksichtigt wird bzw. vermieden werden kann. Weiterhin lag die Aufgabe darin, umfassendere Strukturcharakteristika zu ermitteln, als bisher verwendet. Insbesondere sollen Strukturcharakteristika über einen breiten Frequenzraum, d.h. von mikroskopisch bis makroskopisch ermittelt werden.. Strukturmodifikationen sollen zudem gering sein, damit der ursprüngliche Eindruck, d.h. vor allem die "Natürlichkeit" von lederbasierten Oberflächen erhalten werden kann.

Gelöst wird diese Aufgabe durch die Merkmale des Hauptanspruchs. Weitere vorteilhafte Ausbildungen sind in den Unteransprüchen offenbart.

Im Hinblick auf die verwendeten Begriffe sei vorab folgendes angemerkt:

### Mikroskopisch und makroskopisch

Die Begriffe mikroskopisch und makroskopisch (von griechisch µ 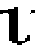 κρóç "klein" bzw. griechisch µακρó 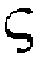 "weit, groß" und griechisch σκoπε 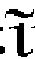 ν "beobachten, betrachten") bezeichnen die Sichtweise mit der ein Gegenstand betrachtet wird und sind in gewisser Weise nur relativ zu beurteilen. Während der Begriff "mikroskopisch" eine Sichtweise darstellt, die sich auf das "Kleinere" konzentriert, bezeichnet der Begriff "makroskopisch" eine Sichtweise, die das Kleinere außer Acht lässt. In einfachen Fällen erfolgt die Trennung der beiden Begriffe bereits dadurch, dass man zur Betrachtung eine Lupe oder ein Mikroskop verwendet oder den gleichen Gegenstand mit bloßem Auge betrachtet.

So nennt man zum Beispiel in der Medizin die Betrachtung mit bloßem Auge "Makroskopie". In der Physik der Gase besteht z.B. ein Gas, welches makroskopisch als homogen angesehen wird, mikroskopisch aus einzelnen Molekülen mit leerem Raum dazwischen.

In der hier vorliegenden Anmeldung ist eine mikroskopisch dreidimensional strukturierte Oberfläche dadurch bestimmt, dass die Oberfläche eine dreidimensionale Prägung oder Narbung aufweist, deren einzelne Strukturen, Hügel oder Kuppen als Abmessung für Längen, Breiten und Höhen Größenordnungen aufweisen, die im Nanometer- bis Mikrometer-Bereich angeordnet sind, also in einem Bereich, der in anderen Bereichen der Physik oder Chemie wohl eher bereits als mesoskopisch (von griechisch µέσo "Mitte") bezeichnet wird..

### Gestaltungsraster

Der Gestaltungsraster (in der Praxis oft das Gestaltungsraster), auch der typografische Raster, Rastersystem oder auf Englisch auch "Grid" genannt, ist ein Ordnungssystem in der visuellen Kommunikation, das als Hilfskonstruktion die Organisation von grafischen Elementen auf einer Fläche oder in einem Raum erleichtert. Gestaltungsaufgaben, in denen der Raster Anwendung findet, sind meist typografischer Art (Quelle: Wikipedia).

### Topologie

Topologie ist eine Wortneuschöpfung und bezeichnet die Lehre von der Lage und Anordnung geometrischer Gebilde im Raum, von ihren räumlichen Beziehungn, gebildet aus den griechischen Worten τóπo 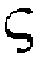 (topos), "Ort, Stelle, Raum" und λóγo 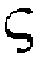 (logos), "Lehre"

Für eine Oberfläche mit einer Lederstruktur ist die Topologie der mikroskopisch dreidimensional strukturierten Oberfläche beispielsweise die mit bloßem Auge wahrnehmbare Körnung und Struktur des Leders, die zugehörigen Lederverletzungen, Falten, Narben und übrigen Struktur-Unregelmäßigkeiten, also das, was der Betrachter in aller Regel als "natürlich" empfinden würde.

Die Lösung der oben genannten Aufgabe besteht nun darin, dass die den Steuerungs-Datensatz bildenden Daten wie folgt ermittelt werden
a) eine durch einen Datensatz topologischer Daten darstellbare ursprüngliche Produkt- oder Folienoberfläche, z.B. eine natürlichen Oberfläche, wird rechnerisch segmentiert, in dem mit Hilfe eines zweidimensionalen Gestaltungsrasters (Grid) eine Unterteilung in kleine Bereiche bzw. Flächenelemente erfolgt,
b) jedem Bereich oder Flächenelement des Gestaltungsrasters werden Daten aus einem Ursprungsdatensatz zugeordnet, wobei die Daten des Ursprungsdatensatzes die topologische Mikrostruktur der ursprünglichen Oberfläche beschreiben (Oberflächentopologie), also z.B. Höhen, Tiefen, Kuppen, Täler oder Neigung, und diese Daten als Bewertungsmerkmale für die weiteren Verfahrens schritte dienen, womit diese Daten die Höhen- bzw. Tiefeninformationen, die Kuppen und Täler oder daraus abgeleitete Größen beinhalten, als abgeleitete Größe etwa die lokale Neigung, beispielsweise dargestellt durch den Normalenvektor,
c) es wird eine Referenzstruktur für die Bewertungsmerkmale festgelegt, insbesondere in Form einer Verteilungsfunktion von z.B. Höhen, Tiefen, Kuppen, Tälern oder Neigungen der Oberfläche
d) die Referenzstruktur wird als Referenzdatensatz mit topologischen Daten zur Beschreibung der Referenzstruktur gespeichert/abgelegt, also vorzugsweise Daten für Höhen- bzw. Tiefeninformationen, z.B. eine solche, bei der in einem Flächenelement eine durch Höhen- bzw. Tiefeninformationen charakterisierte Normkuppe/Nicht-Normkuppe oder eine Halbkugel liegt,
e) jedes der Flächenelemente wird einer rechnerisch simulierten Beleuchtung und Reflexionsbetrachtung in folgender Weise unterworfen:
   - auf einer das Flächenelement im Zentrum aufweisenden und umgebenden Sphäre misst ein an einem beliebigen und zufälligen Ort der Sphäre angeordneter Betrachter/Beobachter in Form von z.B. einer Fotozelle oder Kamera sukzessive die Intensität der Reflexionen des Flächenelementes, vorzugsweise durch Ermittlung des Verhältnisses von einfallendem zu ausfallendem Licht, ggf. auch anderer elektromagnetischer Strahlung, das durch einen Beleuchtungskörpers erzeugt wird, der sukzessive eine Vielzahl von zufällig ausgewählten Positionen auf der Sphäre einnimmt,
   - die Intensitäten der Reflexionen der einzelnen Flächenelementes werden als Reflexions-Daten gespeichert/abgelegt,
   - danach wird der Betrachter an einem weiteren beliebigen und zufälligen Ort der Sphäre angeordnet und misst wiederum in der genannten Art die Intensität der Reflexionen des Flächenelementes, wonach die Reflexions-Daten gespeichert/abgelegt werden und diese Verfahrensschritte für eine vorbestimmte Anzahl von Orten auf der Sphäre wiederholt werden,
f) die Daten des Reflexions-Datensatzes werden mit den Daten eines Reflexions-Referenzdatensatzes verglichen, der die gemäß Schritt e) sich ergebenden Reflexions-Daten des Referenzdatensatz enthält, wobei die Differenz als Differenzdatensatz abgelegt wird,
g) abhängig von der gemäß Schritt f) gebildeten Differenz bzw. dem Differenzdatensatz wird der gemäß b) abgelegte Ursprungsdatensatz in Richtung auf den Referenzdatensatz verändert und letzterem angenähert und als modifizierter Ursprungsdatensatz abgespeichert, wobei letztlich
der die veränderte Topologie des Ursprungsdatensatz darstellende modifizierte Ursprungsdatensatz als Steuerungs-Datensatz eingesetzt wird, mit dessen Hilfe das Werkzeug der Werkzeugmaschine zur Herstellung der Produkt- oder Folienoberflächen in direkter Form zur Oberflächenbearbeitung oder indirekt zur Strukturierung von Werkzeugen gesteuert und verfahren wird. So lässt sich z.B. ein Laser-Schneidkopf einer Werkzeugmaschine, bei der mittels Laserstrahl eine Gravur eines Werkzeugs erfolgt, wird mit Hilfe des Steuerung-Datensatzes so steuern, dass im Werkzeug das Negativ der späteren Topologie abgeformt wird, welches dann in einem Walzen-, Press-, oder Tiefziehverfahren zur Herstellung der Oberfläche verwendet werden kann.

Die Erfindung ermöglicht dadurch eine detaillierte Modifikation von Oberflächenstrukturen und damit die Beeinflussung der Oberflächenerscheinung am fertigen Produkt. Dies gilt sowohl für die Position von Einzelelementen wie Kuppen, Täler etc. in der Ebene, die dann definiert sind durch die Segmente als auch für die Erscheinung / Anmutung je nach die Blick- bzw. Beleuchtungsrichtung. Zudem sind die im fertigen Produkt enthaltenen Veränderungen der durch den Ursprungsdatensatz beschriebenen topologischen Mikrostruktur der Oberfläche minimal, so dass die grundsätzliche Charakteristik der Oberfläche, d.h. der Gesamteindruck für den Betrachter in höchstem Maße erhalten bleibt.

Die charakteristischen Eigenschaften der Oberfläche werden also in mehreren Schritten ermittelt und modifiziert, ohne die eigentliche Erscheinung der Ausgangsoberfläche so zu verändern, dass sie dem Betrachter als "künstliche" Oberfläche erscheinen würde.

Zusammengefasst erfolgt eine Unterteilung der Oberflächentopologie in kleine Bereiche (Segmentierung), die etwa bei einer Lederstruktur der mit bloßem Auge wahrnehmbaren Körnung entsprechen. Dem schließt sich eine Ermittlung von Bewertungsmerkmalen für jedes Segment an, sowie die Festlegung eines Referenzmerkmals. Da die makroskopische, globale Erscheinung einer strukturierten Oberfläche sich zumindest näherungsweise aus der Summe der Reflektionen der einzelnen Segmente ergibt, werden diese unabhängig voneinander bzgl. des Referenzmerkmals optimiert. Ggf. muss dann aus dem Merkmalsraum wieder auf die Topologie der Ursprungs-Oberfläche zurückgeschlossen werden.

Im Speziellen kann zur Charakterisierung der Oberflächenerscheinung die Verteilung der Oberflächenausrichtungen genutzt werden. Diese Normalenverteilung kann für jedes Segment ermittelt und bzgl. einer definierten Referenzverteilung optimiert werden, so dass eine vorteilhafte Weiterbildung darin besteht, dass im Schritt g) die Veränderung des Ursprungsdatensatzes in Richtung auf den Referenzdatensatz dadurch erfolgt,
- dass entsprechend Verfahrensschritt b) für jedes Flächenelement des Gestaltungsrasters auch der Normalenvektor der Eingangstopologie an dieser Stelle ermittelt und als Ursprungs-Vektordatensatz gespeichert wird,
- dass entsprechend Verfahrens schritt c) und d) eine Menge von Normalenvektoren gemäß einer Referenz-Normalenverteilung generiert und als Referenz-Vektordatensatz gespeichert wird,
- dass im Schritt g) jeder Normalenvektor der Eingangstopologie durch denjenigen Normalenvektor aus der Referenz-Normalenverteilung ersetzt wird, der die geringste Distanz zum Normalenvektor der Eingangstopologie aufweist, z.B. durch den Referenz-Normalenvektor, der den kleinsten Winkel zum Normalenvektor der Eingangstopologie aufweist,
- dass ein aus den so ersetzten (neuen) Normalenvektoren bestehender modifizierter Ursprungs-Vektordatensatz gespeichert wird und daraus ein modifizierte Ursprungsdatensatz für die Oberflächentopologie erstellt wird.

Eine weitere vorteilhafte Ausbildung besteht darin, dass der Ursprungsdatensatz für die Oberflächentopologie aus der Erfassung von Höhen- bzw. Tiefeninformationen, Kuppen, Täler oder Steigungen einer natürlichen Oberfläche erzeugt wird, z. B. aus der Erfassung eines Stücks Naturleder, welches zunächst mit Hilfe eines zweidimensionalen Gestaltungsrasters (Grid) segmentiert wird, in dem eine (rechnerisch) Unterteilung in kleine Bereiche bzw. Flächenelemente erfolgt, wobei dann die Höhen- bzw.

Tiefeninformationen des Naturleders mit einem optischen Messverfahren ermittelt werden, z.B. mit Verfahren wie Lasertriangulation, Coded Light, Stereokamera, chromatischer Sensor etc.

Durch ein solches Verfahren gelingt es, für z.B. ein Armaturenbrett in einem Kraftfahrzeug einen Kunstlederbezug bereitzustellen, der einerseits eine für den Betrachter täuschend echte Lederanmutung aufweist und andererseits diese Erscheinung auch völlig unabhängig von üblicherweise kritischen Bereichen bereitstellt, nämlich auch in den durch Lichteinfall durch die Frontscheibe üblicherweise glänzenden und reflektierenden Bereichen. Auch dort wird dann eine reflexionsfreie Lederanmutung erreicht, da die üblicherweise störenden Reflexionen durch die durch das erfindungsgemäße Verfahren geänderte Oberflächenstruktur vermieden werden.

Eine weitere vorteilhafte Ausbildung besteht darin, dass die Segmentierung der Produkt- oder Folienoberfläche so durchgeführt wird, dass der die Produkt- oder Folienoberfläche darstellende Datensatz vorzugsweise entlang der Wendepunkte der Höhen- bzw. Tiefeninformation segmentiert wird, z.B. entlang der Falten eines Leders. Im Sinne der oben beschriebenen und als täuschend echt empfundenen reflexionsfreien Lederanmutung werden dann auch die kritischen Bereiche noch einmal dadurch entschärft, dass durch zum Beispiel Falten eine natürliche und in der Anmutung vom Betrachter akzeptable Trennlinie vorhanden ist.

Es ist mit Hilfe des erfindungsgemäßen Verfahrens auch möglich, in einer Oberfläche "Wasserzeichen" einzubringen, nämlich durch gezielte blickwinkelabhängige Modifikation der Oberfläche das Erscheinungsbild der Oberfläche zu verändern. Auch lassen sich Modifikationen bereitstellen, die eine gezielte Festlegung der Hauptreflexionsrichtung bewirken, z.B. zur Verminderung von Reflektionen auf angrenzenden Glasoberflächen.

Eine weitere vorteilhafte Ausbildung besteht darin, dass der Ursprungsdatensatz für die Oberflächentopologie aus den Höhen- bzw. Tiefeninformationen einer durch graphische Modellierung hergestellten Oberfläche erzeugt ist.

Weitere vorteilhafte Ausführungen bestehen darin, dass die Oberflächentopologie bzw. Höhen- und Tiefeninformation durch Basiselemente beschrieben wird, die manuell oder teilautomatisiert arrangiert und dabei gespiegelt, gedreht oder anderweitig mit gestalterischen Mitteln plastisch verformt werden. Die Basiselemente werden vorteilhafterweise manuell mit Hilfe von CAD- oder Bildbearbeitungsprogrammen erzeugt.

Das erfindungsgemäße Verfahren der Steuerung ist insbesondere für eine Werkzeugmaschine mit einem Werkzeug zur abtragenden Bearbeitung von Oberflächen geeignet, insbesondere mit einer Einrichtung zur Lasergravur von Werkzeugoberflächen oder -formen, wobei die Werkzeugzustellung damit das Abtragen von Material über eine Steuerung des Werkzeugkopfes relativ zu der zu bearbeitenden Oberfläche erfolgt.

## Patentansprüche

1. Verfahren zur Steuerung einer Werkzeugmaschine mit Hilfe eines Steuerungs-Datensatzes, wobei die Werkzeugmaschine entweder zur Bearbeitung von Werkzeugen zur Herstellung oder Bearbeitung einer dreidimensionalen Produktoberfläche / Oberfläche einsetzbar ist, vorzugsweise von Tiefziehformen, oder aber zur Bearbeitung einer Produktoberfläche / Oberfläche als solche einsetzbar ist, wobei die Produkt- oder Folienoberfläche mit einer Mikrostruktur, insbesondere einer Kuppen und Täler bildenden Narbung oder Prägung versehen ist, **dadurch gekennzeichnet, dass** die den Steuerungs-Datensatz bildenden Daten wie folgt ermittelt werden
a) eine durch einen Datensatz topologischer Daten darstellbare ursprüngliche Produkt- oder Folienoberfläche wird rechnerisch segmentiert, in dem mit Hilfe eines zweidimensionalen Gestaltungsrasters (Grid) eine Unterteilung in kleine Bereiche bzw. Flächenelemente erfolgt,
b) jedem Bereich oder Flächenelement des Gestaltungsrasters werden Daten aus einem Ursprungsdatensatz zugeordnet, wobei die Daten des Ursprungsdatensatzes die topologische Mikrostruktur der ursprünglichen Oberfläche beschreiben (Oberflächentopologie), z.B. Höhen, Tiefen, Kuppen, Täler oder Neigung, und als Bewertungsmerkmale für die weiteren Verfahrensschritte dienen,
c) es wird eine Referenzstruktur für die Bewertungsmerkmale festgelegt, insbesondere in Form einer Verteilungsfunktion von z.B. Höhen, Tiefen, Kuppen, Tälern oder Neigungen der Oberfläche
d) die Referenzstruktur wird als Referenzdatensatz mit topologischen Daten zur Beschreibung der Referenzstruktur gespeichert/abgelegt, vorzugsweise Daten der Höhen- bzw. Tiefeninformationen,
e) jedes der Flächenelemente wird einer rechnerisch simulierten Beleuchtung und Reflexionsbetrachtung in folgender Weise unterworfen:
- auf einer das Flächenelement im Zentrum aufweisenden und umgebenden Sphäre misst ein an einem beliebigen und zufälligen Ort der Sphäre angeordneter Betrachter/Beobachter in Form von z.B. einer Fotozelle oder Kamera sukzessive die Intensität der Reflexionen des Flächenelementes, vorzugsweise durch Ermittlung des Verhältnisses von einfallendem zu ausfallendem oder Licht, dass durch einen Beleuchtungskörper erzeugt wird, der sukzessive eine Vielzahl von zufällig ausgewählten Positionen auf der Sphäre einnimmt,
- die Intensitäten der Reflexionen der einzelnen Flächenelementes werden als Reflexions-Daten gespeichert/abgelegt,
- danach wird der Betrachter an einem weiteren beliebigen und zufälligen Ort der Sphäre angeordnet und misst wiederum in der genannten Art die Intensität der Reflexionen des Flächenelementes, wonach die Reflexions-Daten gespeichert/abgelegt werden und diese Verfahrensschritte für eine vorbestimmte Anzahl von Orten auf der Sphäre wiederholt werden,
f) die Daten des Reflexions-Datensatzes werden mit den Daten eines Reflexions-Referenzdatensatzes verglichen, der die gemäß Schritt e) sich ergebenden Reflexions-Daten des Referenzdatensatz enthält, wobei die Differenz als Differenzdatensatz abgelegt wird,
g) abhängig von der gemäß Schritt f) gebildeten Differenz bzw. dem Differenzdatensatz wird der gemäß b) abgelegte Ursprungsdatensatz in Richtung auf den Referenzdatensatz verändert und letzterem angenähert und als modifizierter Ursprungsdatensatz abgespeichert, wobei letztlich
der die veränderte Topologie des Ursprungsdatensatzes darstellende modifizierte Ursprungsdatensatz als Steuerungs-Datensatz eingesetzt wird, mit dessen Hilfe das Werkzeug der Werkzeugmaschine zur Herstellung der Produkt- oder Folienoberflächen in direkter Form oder indirekt zur Strukturierung von Werkzeugen gesteuert und verfahren wird.

2. Verfahren nach Anspruch 1, bei dem im Schritt g) die Veränderung des Ursprungsdatensatzes in Richtung auf den Referenzdatensatz dadurch erfolgt,
- dass entsprechend Verfahrensschritt b) für jedes Flächenelement des Gestaltungsrasters auch der Normalenvektor der Eingangstopologie an dieser Stelle ermittelt und als Ursprungs-Vektordatensatz gespeichert wird,
- dass entsprechend Verfahrensschritt c) und d) eine Menge von Normalenvektoren gemäß einer Referenz-Normalenverteilung generiert und als Referenz-Vektordatensatz gespeichert wird,
- dass im Schritt g) jeder Normalenvektor der Eingangstopologie durch denjenigen Normalenvektor aus der Referenz-Normalenverteilung ersetzt wird, der die geringste Distanz zum Normalenvektor der Eingangstopologie aufweist,
- dass ein aus den so ersetzten (neuen) Normalenvektoren bestehender modifizierter Ursprungs-Vektordatensatz gespeichert wird und daraus ein modifizierter Ursprungsdatensatz für die Oberflächentopologie erstellt wird.

3. Verfahren nach Anspruch 1 oder 2, bei dem der Ursprungsdatensatz für die Oberflächentopologie aus der Erfassung von Höhen- bzw. Tiefeninformationen, Kuppen, Täler oder Steigungen einer natürlichen Oberfläche erzeugt wird, z. B. aus der Erfassung eines Stücks Naturleder, welches zunächst mit Hilfe eines zweidimensionalen Gestaltungsrasters (Grid) segmentiert wird, in dem eine (rechnerisch) Unterteilung in kleine Bereiche bzw. Flächenelemente erfolgt, wobei dann die Höhen- bzw. Tiefeninformationen des Naturleders mit einem optischen Messverfahren ermittelt werden.

4. Verfahren nach Anspruch 3, bei dem die Segmentierung der Produkt- oder Folienoberfläche so durchgeführt wird, dass der die Produkt- oder Folienoberfläche darstellenden Datensatz vorzugsweise entlang der Wendepunkte der Höhen- bzw. Tiefeninformation segmentiert wird, z.B. entlang der Falten eines Leders.

5. Verfahren nach Anspruch 1 oder 2, bei dem der Ursprungsdatensatz für die Oberflächentopologie aus den Höhen- bzw. Tiefeninformationen einer durch graphische Modellierung hergestellten Oberfläche erzeugt ist.

6. Verfahren nach Anspruch 5, bei dem die Oberflächentopologie bzw. Höhen- und Tiefeninformation durch Basiselemente beschrieben wird, die manuell oder teilautomatisiert arrangiert und dabei gespiegelt, gedreht oder anderweitig mit gestalterischen Mitteln plastisch verformt werden.

7. Verfahren nach Anspruch 6, bei dem die Basiselemente manuell mit Hilfe von CAD- oder Bildbearbeitungsprogrammen erzeugt werden.

8. Werkzeugmaschine mit einem Werkzeug zur abtragenden Bearbeitung von Oberflächen, insbesondere mit einer Einrichtung zur Lasergravur von Werkzeugoberflächen oder -formen, wobei die Werkzeugzustellung damit das Abtragen von Material über eine Steuerung des Werkzeugkopfes relativ zu der zu bearbeitenden Oberfläche erfolgt, **dadurch gekennzeichnet, dass** die Steuerung nach einem Verfahren gemäß Anspruch 1 bis 7 erfolgt.
